# EUROPEAN PATENT APPLICATION

(11) **EP 4 836 323 A1**
(43) Date of publication of application: **04.11.2026**
(21) Application number: 24909297.4
(22) Date of filing: 05.01.2024
(51) Int. Cl.: H04B 10/516

(54) **LASER COMMUNICATION ASSEMBLY**

(30) Priority: 27.12.2023 CN 202323603271 U
(71) Applicant: O-Net Technologies (Shenzhen) Group Co., Ltd, Shenzhen, Guangdong 518000 (CN)
(72) Inventor: LUO, Ouhe, Shenzhen, Guangdong 518000 (CN)
(74) Representative: Mirlach, Xiaolu
(86) International application number: PCT/CN2024/070910
(87) International publication number: WO 2025/138324

(57) **Abstract**

This application relates to the field of optical information technology, and particularly to a laser communication assembly and an intelligent vehicle communication system. The laser communication assembly includes: a central unit and a node unit group connected to the central unit, where the node unit group includes at least one node unit; and each node unit includes a silicon-based Mach-Zehnder modulator, and is configured to modulate an unmodulated optical signal to obtain an uplink signal, to send the uplink signal to the central unit; and an optical device, where each node unit is connected to the central unit via the optical device, and the optical device includes an optical coupler or an optical switch. This application achieves high-speed data transmission, high reliability, high integration, compactness, and low cost.

## Description

### FIELD OF TECHNOLOGY

This application relates to the field of optical information technology, and particularly to a laser communication assembly and an intelligent vehicle communication system.

### BACKGROUND

With development of autonomous vehicles, more and more sensors, including radar, lidar, and cameras, have been integrated into the automotive field. Each sensor receives and transmits a large amount of data to a central unit, making in-vehicle autonomous driving possible. However, due to massive data volume, a transmission rate of up to 1 Gbps or higher is required between the sensors and the central unit.

To meet the needs of the automotive industry, a specific Ethernet protocol communication based on wired cables (IEEE 802.3 PHY) has been developed. However, electrical connections are susceptible to electromagnetic noise interference, and implementing electrical connections in certain parts of a vehicle may present electromagnetic issues for original equipment manufacturers.

### SUMMARY

A technical problem to be solved by embodiments of this application is to provide a laser communication assembly and an intelligent vehicle communication system to solve a problem of electromagnetic interference in the prior art.

This application discloses a laser communication assembly, including:
a central unit and a node unit group connected to the central unit, where the node unit group includes at least one node unit;
each node unit includes a silicon-based Mach-Zehnder modulator, and is configured to modulate an unmodulated optical signal to obtain an uplink signal, to send the uplink signal to the central unit; and
an optical device, where each node unit is connected to the central unit via optical fiber and the optical device, and the optical device comprises an optical coupler or an optical switch.

Optionally, each node unit includes a first optical switch and a second optical switch;
an output terminal of a second optical switch of a preceding node unit in the node unit group is connected to an input terminal of a first optical switch of a subsequent node unit; and
an input terminal of the first optical switch of a first-ranked node unit is connected to an uplink transmitting terminal of the central unit, and an input terminal of a second optical switch of a last-ranked node unit is connected to an uplink receiving terminal of the central unit.

Optionally, in each node unit, a first output terminal of the first optical switch is connected to an input terminal of the silicon-based Mach-Zehnder modulator, a second output terminal of the first optical switch is connected to a second input terminal of the second optical switch, and a first input terminal of the second optical switch is connected to an output terminal of the silicon-based Mach-Zehnder modulator.

Optionally, the central unit includes:
an unmodulated laser source, where an output terminal of the unmodulated laser source serves as the uplink transmitting terminal; and
a variable optical attenuator, where an input terminal of the variable optical attenuator serves as the uplink receiving terminal.

Optionally, the central unit includes:
a photodiode, where a receiving terminal of the photodiode is connected to an output terminal of the variable optical attenuator.

Optionally, each node unit is connected to at least one sensor, and configured to acquire a sensing signal output by the sensor.

Optionally, the central unit includes a downlink communication transmitter, and the downlink communication transmitter is connected to an input terminal of the optical device; and
each node unit includes a downlink communication receiver, and each downlink communication receiver is connected to one output terminal of the optical device.

Types of the downlink communication transmitter and the downlink communication receiver are any one of small form-factor pluggable optical modules or enhanced small form-factor pluggable optical modules, and a data transmission rate of the small form-factor pluggable optical module is at least 10G.

Optionally, the central unit includes a central electronic card, and the central electronic card is connected to each component of the central unit to control each component of the central unit; and
each node unit includes a node electronic card, and the node electronic card is connected to each component of the node unit to control each component of the node unit.

This application further discloses an intelligent vehicle communication system, including the laser communication assembly as described above.

Compared with the prior art, the advantageous effects of the laser communication assembly provided by the embodiments of this application are as follows: a silicon-based Mach-Zehnder modulator is adopted for signal modulation, and high-order modulation techniques can be achieved to improve a data transmission rate; optical signal transmission is adopted, and optical signals are less susceptible to electromagnetic interference; meanwhile, the silicon-based Mach-Zehnder modulator has good thermal stability and can maintain stable performance in high-temperature environments, thus improving system reliability and reducing errors and interruptions in data transmission. The node unit group and the central unit in the laser communication assembly can be connected via optical devices and optical fibers to form a compact system structure. Meanwhile, the silicon-based Mach-Zehnder modulator features high integration density and compatibility with CMOS (Complementary Metal-Oxide-Semiconductor) processes, allowing integration with other photonic integrated circuit devices to achieve a highly integrated optoelectronic system and resulting in smaller system size and lower power consumption. The silicon-based Mach-Zehnder modulator can be manufactured using standard CMOS processes, making it compatible with existing semiconductor manufacturing processes. This reduces manufacturing costs.

### BRIEF DESCRIPTION OF THE DRAWINGS

The following provides a further detailed description of the technical solutions of this application in conjunction with the accompanying drawings and embodiments. In the accompanying drawings:
FIG. 1 is a schematic structural diagram of a laser communication assembly provided by an embodiment of this application; and
FIG. 2 is a schematic structural diagram of an intelligent vehicle communication system provided by an embodiment of this application.

Reference numerals in the accompanying drawings are as follows:
1, laser communication assembly; 10, central unit; 11, unmodulated laser source; 12, variable optical attenuator; 13, photodiode; 14, central electronic card; 15, downlink communication transmitter; 20, node unit group; 21, node unit; 211, silicon-based Mach-Zehnder modulator; 212, first optical switch; 213, second optical switch; 214, node electronic card; 215, downlink communication receiver; 30, optical device; 40, sensor; 2, intelligent vehicle communication system.

### DESCRIPTION OF THE EMBODIMENTS

It should be noted that, in the absence of a conflict, embodiments of this application can be combined with features in the embodiments. Referring now to the accompanying drawings, a detailed description of preferred embodiments of this application is provided below.

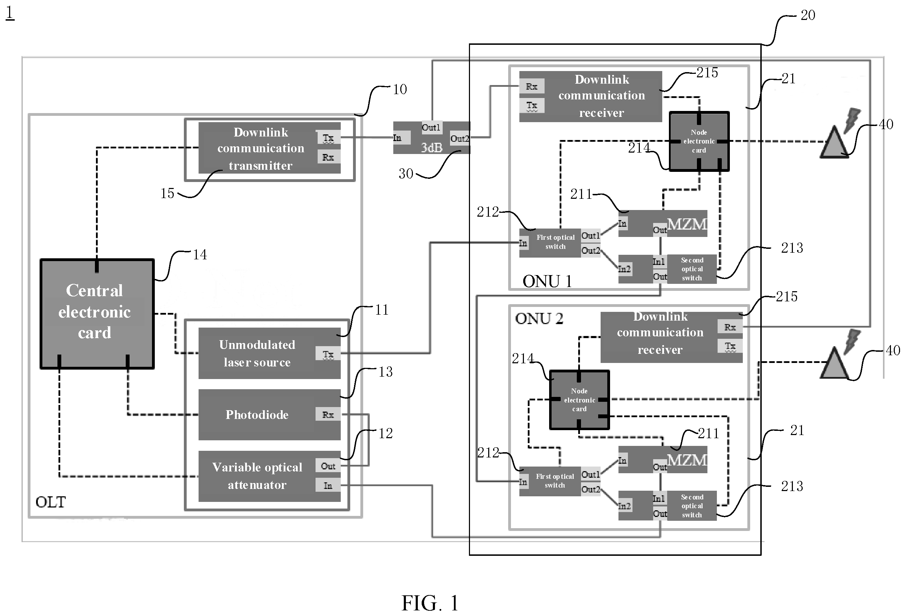

An embodiment of this application provides a laser communication assembly. As shown in FIG. 1, the laser communication assembly 1 includes a central unit 10 and a node unit group 20, where the node unit group includes at least one node unit 21. The central unit 10 is an OLT (Optical Line Terminal), and typically located at a central office or data center of a communication system 1 and is responsible for connecting optical fiber lines and providing high-speed optical access. The OLT converts optical signals into electrical signals and connects to a core network of a communication system 1 to achieve data transmission. The node unit 21 is an ONU (Optical Network Unit), and the ONU is a terminal device that communicates with the OLT and is responsible for receiving and transmitting data. In the communication system 1, a downlink (DL) transmits data from a root (central unit 10) to nodes (node units 21). An uplink (UL) transmits data from the nodes (node units 21) to the root (central unit 10). In this way, bidirectional communication is achieved.

The laser communication assembly 1 further includes an optical device 30, and each node unit 21 is connected to the central unit 10 via the optical device 30 and the optical fiber. The optical device 30 may be an optical coupler or an optical switch. In the embodiment, the optical coupler is taken as an example for illustration. The optical fiber may be a standard single-mode fiber. The optical device 30 has one input terminal and N output terminals, where N is an integer greater than or equal to a total number of node units 21. For example, if the number of node units 21 is 2, N may be 2, 3 or 4, i.e., any integer greater than 2, such that each node unit 21 can be connected to one output terminal of the optical device 30. As shown in FIG. 1, the node unit group 20 has two node units 21 (ONU1 and ONU2), where the node unit 21 ONU1 is connected to an output terminal Out1 of the optical device 30, and the node unit 21 ONU2 is connected to an output terminal Out2 of the optical device 30.

Each node unit 21 includes a silicon-based Mach-Zehnder modulator 211 (MZM), and the Mach-Zehnder modulator is a modulator used in optical communication and optical fiber communication systems. The silicon-based Mach-Zehnder modulator 211 in the node unit 21 is configured to modulate an unmodulated optical signal to obtain an uplink signal that can be transmitted on the uplink. The uplink signal is used to be transmitted to the central unit 10 via the uplink.

The silicon-based Mach-Zehnder modulator 211 has efficient modulation performance and can achieve advanced modulation formats such as quadrature phase-shift keying (QPSK) and eight phase-shift keying (8PSK). High-order modulation capability enables more information to be transmitted within limited spectrum resources, thereby increasing transmission capacity and efficiency of optical fiber communication systems. The silicon-based Mach-Zehnder modulator 211 can meet transmission rates of up to 1 Gbps or higher. High-efficiency modulation performance and fast response speed of the silicon-based Mach-Zehnder modulator 211 enable high-speed data transmission. It can represent digital data by modulating intensity or phase of the optical signal, thus achieving high-speed optical signal modulation and demodulation. In addition, the silicon-based Mach-Zehnder modulator 211 is compact and highly integrated, and can be combined with other photonic integrated circuit devices to further improve transmission rates and performance.

In vehicle communication systems, due to working environment inside the vehicle and external conditions, high temperatures may occur. Inside a vehicle, operation of components such as an engine, transmission, and a braking system generates heat, causing an internal temperature of the vehicle to rise. In addition, vehicle communication equipment may be concentrated in areas such as an electronic control unit (ECU) or an in-vehicle gateway, and these devices also generate a certain amount of heat during operation. In addition, vehicle communication systems may also be affected by high temperatures when exposed to external environments. For example, in hot weather, when a vehicle is exposed to sunlight or operates in high-temperature regions, an external temperature of the vehicle may rise, thereby imposing thermal stress on the vehicle communication equipment. The silicon-based Mach-Zehnder modulator 211 has thermal stability up to 110°C. This means that the modulator can maintain good performance at high temperatures and is less susceptible to thermal effects. Thermal stability is very important for reliability and long-term stability of the laser communication assembly 1, especially in high-temperature environments or when high-power transmission is required.

As described above, in the embodiment, the silicon-based Mach-Zehnder modulator is disposed in the node unit to modulate the unmodulated laser signal to obtain the uplink signal to be sent to the central unit. The silicon-based Mach-Zehnder modulator is adopted for signal modulation, and high-order modulation techniques can be achieved to improve data transmission rates. The laser communication assembly uses optical signal transmission. Compared with conventional electrical signal transmission, optical signals are less susceptible to electromagnetic interference. Meanwhile, the silicon-based Mach-Zehnder modulator has good thermal stability and can maintain stable performance in high-temperature environments. These characteristics improve system reliability, reduce errors and interruptions in data transmission, and the node unit group and the central unit in the laser communication assembly can be connected via optical devices and optical fibers to form a compact system structure. Meanwhile, the silicon-based Mach-Zehnder modulator features high integration density and compatibility with CMOS (Complementary Metal-Oxide-Semiconductor) processes, allowing integration with other photonic integrated circuit devices to achieve a highly integrated optoelectronic system. Such high integration and compactness result in smaller system size, lower power consumption, and easier integration into vehicle communication systems. The silicon-based Mach-Zehnder modulator can be manufactured using standard CMOS processes, making it compatible with existing semiconductor manufacturing processes. This reduces manufacturing costs and can further reduce costs by utilizing a large-scale integrated circuit manufacturing technology.

Continue to refer to FIG. 1. Each node unit 21 includes a first optical switch 212 and a second optical switch 213, where the first optical switch 212 is a 1×2 optical switch, and the second optical switch 213 is a 2×1 switch. At least one node unit 21 in the node unit group 20 is sequentially connected via the second optical switch, and an output terminal of a second optical switch 213 of a preceding node unit 21 in the node unit group 20 is connected to an input terminal of a first optical switch 212 of a subsequent node unit 21.

As shown in FIG. 1, the node unit 21 ONU1 is the preceding node, and the node unit 21 ONU2 is the subsequent node. An output terminal Out of the second optical switch 213 of the node unit 21 ONU1 is connected to an input terminal In of the first optical switch 212 of the node unit 21 ONU2. In other embodiments, when there are more node units 21, the input terminal of the first optical switch 212 of the third node unit 21 is connected to the output terminal of the second optical switch 213 of the node unit 21 ONU2, and this connection repeats for all subsequent node units 21 to achieve sequential connection of multiple node units 21.

An input terminal of the first optical switch 212 of a first-ranked node unit 21 is connected to an uplink transmitting terminal of the central unit 10, and an input terminal of the second optical switch 213 of a last-ranked node unit 21 is connected to an uplink receiving terminal of the central unit 10.

As shown in FIG. 1, the node unit 21 ONU1 is the first-ranked node unit, and the node unit 21 ONU2 is the last-ranked node unit. The input terminal In of the first optical switch 212 of the node unit 21 ONU1 is connected to the uplink transmitting terminal of the central unit 10 for receiving the optical signal sent by the central unit 10 through the uplink transmitting terminal, and the output terminal Out of the second optical switch 213 of the node unit 21 ONU2 is connected to the uplink receiving terminal of the central unit 10 for sending the modulated uplink signal to the central unit 10.

In the embodiment, the node units 21 do not operate simultaneously. Each node unit 21 can only communicate within a given time slot window. Therefore, when one node unit 21 is in operation, an optical signal provided by the uplink transmitting terminal of the central unit 10 can be obtained through sequential connection of each node unit 21 and the input terminal of the first optical switch 212 of the first-ranked node unit 21, and the uplink signal can be output to the uplink receiving terminal of the central unit 10 through sequential connection of each node unit 21 and the input terminal of the second optical switch 213 of the last-ranked node unit 21.

Continue to refer to FIG. 1. In each node unit 21, a first output terminal of the first optical switch 212 is connected to an input terminal of the silicon-based Mach-Zehnder modulator, a second output terminal of the first optical switch 212 is connected to a second input terminal of the second optical switch 213, and a first input terminal of the second optical switch 213 is connected to a output terminal of the silicon-based Mach-Zehnder modulator. As shown in FIG. 1, the first output terminal Out1 of the first optical switch 212 of the node unit 21 ONU1 is connected to the input terminal In of the silicon-based Mach-Zehnder modulator 211, the output terminal Out of the silicon-based Mach-Zehnder modulator 211 is connected to the first input terminal In1 of the second optical switch 213 of the node unit 21 ONU1, and the second output terminal Out2 of the first optical switch 212 is connected to the second input terminal In2 of the second optical switch 213.

The node unit 21 ONU2 has a structure similar to the node unit 21 ONU1, where the first output terminal Out1 of the first optical switch 212 is connected to the input terminal In of the silicon-based Mach-Zehnder modulator 211, the output terminal Out of the silicon-based Mach-Zehnder modulator 211 is connected to the first input terminal In1 of the second optical switch 213 of the node unit 21 ONU1, and the second output terminal Out2 of the first optical switch 212 is connected to the second input terminal In2 of the second optical switch 213.

In one embodiment, when the node unit 21 ONU1 is in operation, the remaining node units 21 (node unit 21 ONU2) are in non-operation, and the input terminal In of the first optical switch 212 of the node unit 21 ONU1 receives the unmodulated optical signal provided by the central unit 10. In this case, the first output terminal Out1 of the first optical switch 212 is in an ON state and the second output terminal Out2 is in an OFF state. Therefore, the unmodulated optical signal is output to the input terminal In of the silicon-based Mach-Zehnder modulator 211 through the first output terminal Out1 of the first optical switch 212. The silicon-based Mach-Zehnder modulator 211 modulates the unmodulated optical signal to obtain the modulated uplink signal. In this case, the first input terminal In1 of the second optical switch 213 of the node unit 21 ONU1 is in an ON state, and the second input terminal In2 is in an OFF state. The uplink signal is transmitted from the output terminal Out of the silicon-based Mach-Zehnder modulator 211 to the first input terminal In1 of the second optical switch 213 of the node unit 21 ONU1, and then output from the output terminal Out of the second optical switch 213 to the input terminal In of the first optical switch 212 of the node unit 21 ONU2.

In this case, the first output terminal Out1 of the first optical switch 212 of the node unit 21 ONU2 is in an OFF state, and the second output terminal Out2 is in an ON state. The uplink signal is transmitted to the second input terminal In2 of the second optical switch 213 of the node unit 21 ONU2 through the second output terminal Out2 of the first optical switch 212 of the node unit 21 ONU2. In this case, the first input terminal In1 of the node unit 21 ONU2 is in an ON state, and the second input terminal In2 is in an OFF state. Therefore, the uplink signal can be input through the second input terminal In2 of the second optical switch 213 and output from the output terminal Out of the second optical switch 213 to the uplink receiving terminal of the central unit 10. Thus, the central unit 10 can receive the uplink signal.

In another embodiment, when the node unit 21 ONU2 is in operation, the remaining node units 21 (node unit 21 ONU1) are in non-operation. The input terminal In of the first optical switch 212 of the node unit 21 ONU1 receives the unmodulated optical signal provided by the central unit 10. In this case, the first output terminal Out1 of the first optical switch 212 is in the OFF state, and the second output terminal Out2 is in the ON state. Therefore, the unmodulated optical signal is output to the second input terminal In2 of the second optical switch 213 through the second output terminal Out2 of the first optical switch 212. At this time, the first input terminal In1 of the second optical switch 213 is in the OFF state, and the second input terminal In2 is in the ON state. The unmodulated optical signal is input through the second input terminal In2 of the second optical switch 213 and output from the output terminal Out of the second optical switch 213 to the input terminal In of the first optical switch 212 of node unit 21 ONU2.

In this case, the first output terminal Out1 of the first optical switch 212 of the node unit 21 ONU2 is in the ON state, and the second output terminal Out2 is in the OFF state. Therefore, the unmodulated optical signal is transmitted to the input terminal In of the silicon-based Mach-Zehnder modulator 211 of the node unit 21 ONU2 through the first output terminal Out1. The silicon-based Mach-Zehnder modulator 211 modulates the unmodulated optical signal to obtain the modulated uplink signal. The uplink signal is output from the output terminal Out of the silicon-based Mach-Zehnder modulator 211 to the first input terminal In1 of the second optical switch 213. In this case, the first input terminal In1 of the node unit 21 ONU2 is in an OFF state, and the second input terminal In2 is in an ON state. Therefore, the uplink signal can be input through the first input terminal In1 of the second optical switch 213 and output from the output terminal Out of the second optical switch 213 to the uplink receiving terminal of the central unit 10. Thus, the central unit 10 can receive the uplink signal.

In the embodiment, between the first output terminal of the first optical switch and the input terminal of the silicon-based Mach-Zehnder modulator, between the second output terminal of the first optical switch and the second input terminal of the second optical switch, between the first input terminal of the second optical switch and the output terminal of the silicon-based Mach-Zehnder modulator, between the input terminal of the first optical switch of the first-ranked node unit and the uplink transmitting terminal of the central unit, and between the input terminal of the second optical switch of the last-ranked node unit and the uplink receiving terminal of the central unit, polarization-maintaining fibers are used for connection. This is because the silicon-based Mach-Zehnder modulator 211 requires polarization control.

In the silicon-based Mach-Zehnder modulator 211, modulation of the optical signal is achieved by controlling the polarization state of light. In the silicon-based Mach-Zehnder modulator 211, the optical signal is transmitted through two splitters and two equal-length optical waveguides. A relative optical path difference between these two optical waveguides causes interference of the optical signal, thereby resulting in modulation of the optical signal. However, this interference effect is highly sensitive to the polarization state of the optical signal. When the polarization state of the optical signal changes, an interference effect causes changes in intensity and phase of the output optical signal. Therefore, in order to achieve a stable modulation effect, it is necessary to control polarization of the optical signal and maintain it in a stable state.

In the embodiment, each node unit 21 is connected to at least one sensor 40 and acquires at least one sensing signal provided by the sensor 40. The silicon-based Mach-Zehnder modulator 211 can modulate the unmodulated optical signal according to the received sensing signal, thereby loading the sensing signal onto the unmodulated optical signal to obtain the uplink signal. The uplink signal is transmitted to the central unit 10, such that the central unit 10 can acquire the sensing signal provided by the sensor 40.

Refer to FIG. 1. The central unit 10 includes an unmodulated laser source 11, the unmodulated laser source 11 is used to output an unmodulated optical signal, and an output terminal Tx thereof serves as the uplink transmitting terminal of the central unit 10. The central unit 10 further includes a variable optical attenuator 12, and the variable optical attenuator is configured to adjust the optical power of the received uplink signal such that the power of the uplink signal is suitable for signal analysis, and an input terminal In thereof serves as the uplink receiving terminal of the central unit 10.

The unmodulated laser source 11 is provided in the central unit 10 to avoid using an active optical source in the node unit 21. Since an end of the node unit 21 is susceptible to temperature variations, if an active optical source is used, temperature control is required, which increases cost and complexity. Therefore, to simplify design and reduce costs, temperature control is usually only performed at the central unit 10.

Refer to FIG. 1. The central unit 10 further includes a photodiode 13, where the receiving terminal Rx of the photodiode 13 is connected to the output terminal Out of the variable optical attenuator 12, such that the uplink signal with adjusted optical power is converted from an optical signal to an electrical signal, facilitating analysis to obtain the sensing signal. In other embodiments, other optoelectronic conversion modules may also be adopted, such as photodetectors, photomultiplier tubes and photoconductors.

Refer to FIG. 1. The central unit 10 includes a central electronic card 14, and the central electronic card 14 is connected to the unmodulated laser source 11, the variable optical attenuator 12, and the photodiode 13. The central electronic card 14 can control operation of the unmodulated laser source 11, the variable optical attenuator 12, and the photodiode 13. For example, the central electronic card 14 drives the unmodulated laser source 11 to emit unmodulated laser, controls an attenuation level of the variable optical attenuator 12, receives the electrical signal from the photodiode 13, and parses the electrical signal.

The node unit 21 includes a node electronic card 214, and the node electronic card 214 is connected to the silicon-based Mach-Zehnder modulator 211, the first optical switch 212, and the second optical switch 213, and is also connected to the sensor 40. The node electronic card 214 can control operation of the silicon-based Mach-Zehnder modulator 211, the first optical switch 212, and the second optical switch 213. For example, the node electronic card 214 controls the silicon-based Mach-Zehnder modulator 211 to modulate the unmodulated optical signal according to the sensing signal from the sensor, so as to load the sensing signal onto the unmodulated optical signal, and controls the ON/OFF state between all input ports and output ports of the first optical switch 212 and the second optical switch 213.

Refer to FIG. 1. The central unit 10 further includes a downlink communication transmitter 15, and the downlink communication transmitter 15 is connected to the input terminal In of the optical device 30. Each node unit 21 includes a downlink communication receiver 215, and each downlink communication receiver 215 is connected to an output terminal of the optical device 30. As shown in FIG. 1, the receiving terminal Rx of the downlink communication receiver 215 of the node unit 21 ONU1 is connected to the first output terminal Out1 of the optical device 30, and the receiving terminal Rx of the downlink communication receiver 215 of the node unit 21 ONU2 is connected to the second output terminal Out2 of the optical device 30.

The downlink communication transmitter 15 is connected to the central electronic card 14, and the central electronic card 14 controls the downlink communication transmitter 15 to send downlink signals. The downlink communication receiver 215 is connected to the node electronic card 214, and the node electronic card 214 controls the downlink communication receiver 215 to receive the downlink signals and analyze the downlink signals. Types of the downlink communication transmitter 15 and the downlink communication receiver 25 are any of small form-factor pluggable optical modules or enhanced small form-factor pluggable optical modules, and a transmission rate of the small form-factor pluggable optical module is at least 10G.

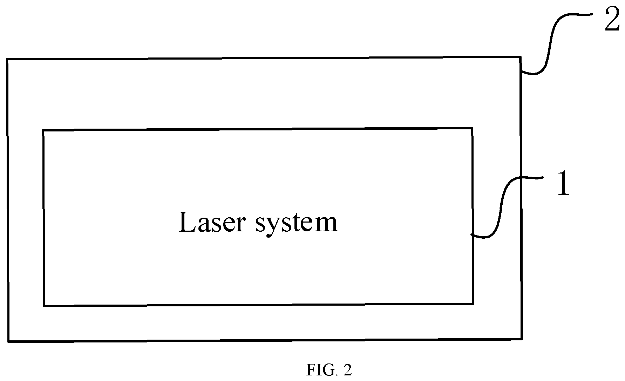

Refer to FIG. 2. FIG. 2 is a schematic structural diagram of an intelligent vehicle communication system provided by an embodiment of this application. The intelligent vehicle communication system 2 includes a laser communication assembly 1. Since the laser system 1 adopts a silicon-based Mach-Zehnder modulator for signal modulation, the intelligent vehicle communication system 2 has advantageous effects such as high-speed data transmission, high reliability, high integration, compactness, and low cost.

It should be understood that the above embodiments are merely illustrative of the technical solutions of this application and not restrictive. Those skilled in the art may modify the technical solutions described in the above embodiments or make equivalent substitutions for some technical features. All such modifications and substitutions shall fall within the scope of protection defined by the appended claims of this application.

## Claims

1. A laser communication assembly, comprising:
a central unit and a node unit group connected to the central unit, wherein the node unit group comprises at least one node unit;
each node unit comprises a silicon-based Mach-Zehnder modulator, and is configured to modulate an unmodulated optical signal to obtain an uplink signal, to send the uplink signal to the central unit; and
an optical device, wherein each node unit is connected to the central unit via optical fiber and the optical device, and the optical device comprises an optical coupler or an optical switch.

2. The laser communication assembly according to claim 1, wherein each node unit comprises a first optical switch and a second optical switch;
an output terminal of a second optical switch of a preceding node unit in the node unit group is connected to an input terminal of a first optical switch of a subsequent node unit; and
an input terminal of a first optical switch of a first-ranked node unit is connected to an uplink transmitting terminal of the central unit, and an input terminal of a second optical switch of a last-ranked node unit is connected to an uplink receiving terminal of the central unit.

3. The laser communication assembly according to claim 2, wherein
in each node unit, a first output terminal of the first optical switch is connected to an input terminal of the silicon-based Mach-Zehnder modulator, a second output terminal of the first optical switch is connected to a second input terminal of the second optical switch, and a first input terminal of the second optical switch is connected to an output terminal of the silicon-based Mach-Zehnder modulator.

4. The laser communication assembly according to claim 2, wherein the central unit comprises:
an unmodulated laser source, wherein an output terminal of the unmodulated laser source serves as the uplink transmitting terminal; and
a variable optical attenuator, wherein an input terminal of the variable optical attenuator serves as the uplink receiving terminal.

5. The laser communication assembly according to claim 4, wherein the central unit comprises:
a photodiode, wherein a receiving terminal of the photodiode is connected to an output terminal of the variable optical attenuator.

6. The laser communication assembly according to claim 1, wherein each node unit is connected to at least one sensor, and configured to acquire a sensing signal output by the sensor.

7. The laser communication assembly according to claim 1, wherein the central unit comprises a downlink communication transmitter, and the downlink communication transmitter is connected to an input terminal of the optical device; and
each node unit comprises a downlink communication receiver, and each downlink communication receiver is connected to one output terminal of the optical device.

8. The laser communication assembly according to claim 7, wherein types of the downlink communication transmitter and the downlink communication receiver are any one of small form-factor pluggable optical modules or enhanced small form-factor pluggable optical modules, and a data transmission rate of the small form-factor pluggable optical module is at least 10G.

9. The laser communication assembly according to any one of claims 1 to 8, wherein the central unit comprises a central electronic card, and the central electronic card is connected to each component of the central unit to control each component of the central unit; and
each node unit comprises a node electronic card, and the node electronic card is connected to each component of the node unit to control each component of the node unit.

10. An intelligent vehicle communication system, comprising the laser communication assembly according to any one of claims 1 to 9.
